# FASCICULE DE BREVET EUROPEEN

(11) **EP 0 721 071 B1**
(45) Date de publication et mention de la délivrance du brevet: **02.09.1998**
(21) Numéro de dépôt: 95402973.2
(22) Date de dépôt: 29.12.1995
(51) Int. Cl.: F16F 13/14

(54) **Perfectionnements aux manchons de support antivibratoires hydrauliques**
Verbesserungen in vibrationsdämpfenden hydraulischen Stützen
Improvements to antivibratory hydraulic supports

(30) Priorité: 04.01.1995 FR 9500041
(43) Date de publication de la demande: 10.07.1996
(73) Titulaire: HUTCHINSON, F-75008 Paris (FR)
(72) Inventeur: Bretaudeau, Jean-Pierre, F-28200 Chateaudun (FR); Schwartz, Paul, F-28200 Chateaudun (FR); Le Guillant, Daniel, F28200 Conie-Molitard (FR)
(74) Mandataire: Burbaud, Eric

(56) Documents cités:
- EP-A- 0 248 714
- EP-A- 0 359 655
- DE-A- 4 305 808
- US-A- 4 822 010
- PATENT ABSTRACTS OF JAPAN vol. 14 no. 373 (M-1009) [4316] ,13 Août 1990 & JP-A-02 134435 (TOKAI RUBBER IND LTD) 23 Mai 1990,

## Description

L'invention est relative aux manchons de support antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère conformé de façon à former avec celles-ci au moins deux poches étanches diamétralement opposées communiquant entre elles par un canal étroit, l'ensemble desdites poches et dudit canal étant rempli d'un liquide amortisseur.

De tels manchons sont destinés à être montés entre deux pièces ou structures rigides solidarisables respectivement avec les deux armatures et susceptibles de subir l'une par rapport à l'autre des oscillations orientées selon la direction diamétrale des poches, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou un train de suspension avant ou arrière de ce véhicule.

L'invention concerne plus particulièrement, parmi les manchons de support ci-dessus, ceux dans lequels :
- la portion du corps en élastomère qui délimite l'une au moins des poches présente en section axiale la forme générale d'un U ou V ouvert radialement vers l'extérieur,
- le canal étroit qui relie les deux poches s'étend selon un arc de cercle centré sur l'axe du manchon et disposé à une extrémité axiale de ce manchon, près de son armature externe,
- et ledit manchon comporte une cage cylindrique présentant un diamètre extérieur légèrement inférieur au diamètre intérieur de l'armature externe.

Dans les modes de réalisation connus de ces manchons (voir le brevet EP-B-0 248 714), l'armature externe est constituée par un tronçon de tube continu indépendant enveloppant le corps en élastomère et formant boîtier pour l'ensemble.

Ces réalisations peuvent présenter de l'intérêt lorsque la pièce ou structure rigide sur laquelle doit être fixée l'armature externe comporte elle-même un logement ou palier cylindrique propre à recevoir directement cette armature externe par emmanchement à force.

L'invention se rapporte plus particulièrement aux cas où l'armature externe du manchon doit être fixée sur une pièce ou structure rigide écartée de celui-ci par l'intermédiaire d'un bras rigide.

L'un des buts de cette invention est de simplifier le montage global d'un tel manchon sur une telle structure et de réduire le coût de l'ensemble en diminuant le nombre des pièces requises et celui des opérations de fixation nécessaires.

Il convient de rappeler ici qu'il a déjà été proposé de constituer par une partie intégrante d'un bras de liaison l'armature externe d'un manchon antivibratoire hydraulique (voir le brevet EP-A-0 172 700).

Mais, dans les modes de réalisation proposés pour un tel ensemble, le canal étroit en arc de cercle reliant entre elles les deux poches s'étendait selon un plan transversal du manchon disposé au milieu de la dimension axiale de ce manchon, ce qui rendait difficile la fabrication de ce bras, par moulage ou autrement.

L'invention présente non seulement l'avantage mentionné ci-dessus de la simplification, par réduction du nombre des pièces constitutives de l'ensemble manchon-bras, mais aussi celui de simplifier considérablement la construction du canal étroit.

A cet effet, le manchon du genre défini ci-dessus est caractérisé selon l'invention en ce que son armature externe est constituée par une portion intégrante d'un bras rigide propre à relier le manchon à une structure rigide écartée de ce manchon et en ce que la cage cylindrique est épaulée à l'une de ses extrémités axiales par une collerette radiale externe, le canal étroit étant délimité par cette collerette, par la portion de la paroi cylindrique de la cage que prolonge ladite collerette, par l'extrémité axiale de l'armature externe qui est adjacente à cette collerette et par un ressaut interne de ladite armature externe, et la liaison entre les poches et le canal étroit étant effectuée à travers des ouvertures pratiquées dans la paroi latérale cylindrique de la cage.

Dans des modes de réalisation préférés, on a recours en outre à l'une et/ou à l'autre des dispositions suivantes :
- les ouvertures ci-dessus constituent des portions de fenêtres plus larges évidées dans la paroi latérale cylindrique de la cage, radialement en regard des poches,
- à l'extrémité axiale du manchon opposée à celle où se trouve la collerette, l'un des deux éléments constitués par la cage et par l'armature externe présente un bord rabattu radialement juxtaposé axialement contre l'extrémité axiale de l'autre élément,
- la cage est enrobée intégralement, à l'exception éventuellement de la face plane extérieure de sa collerette, par le matériau élastomère constitutif du corps,
- l'armature externe et le bras sont constitués par deux éléments distincts en tôle emboutie soudés l'un sur l'autre.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, montre schématiquement l'ensemble d'un moteur de véhicule monté sur le châssis de ce véhicule à l'aide de manchons établis selon l'invention.

Les figures 2 et 3 montrent respectivement en coupe axiale et en coupe transversale à échelle réduite selon III-III, figure 2, l'un de ces manchons.

La figure 4 montre en vue perspective une pièce constitutive dudit manchon.

Les figures 5, 6 et 7 montrent respectivement trois variantes de détails de la figure 2.

La figure 8 montre semblablement à la figure 2 une variante de manchon encore conforme à l'invention.

Les figures 9, 10 et 11 montrent respectivement trois variantes de détails de la figure 8.

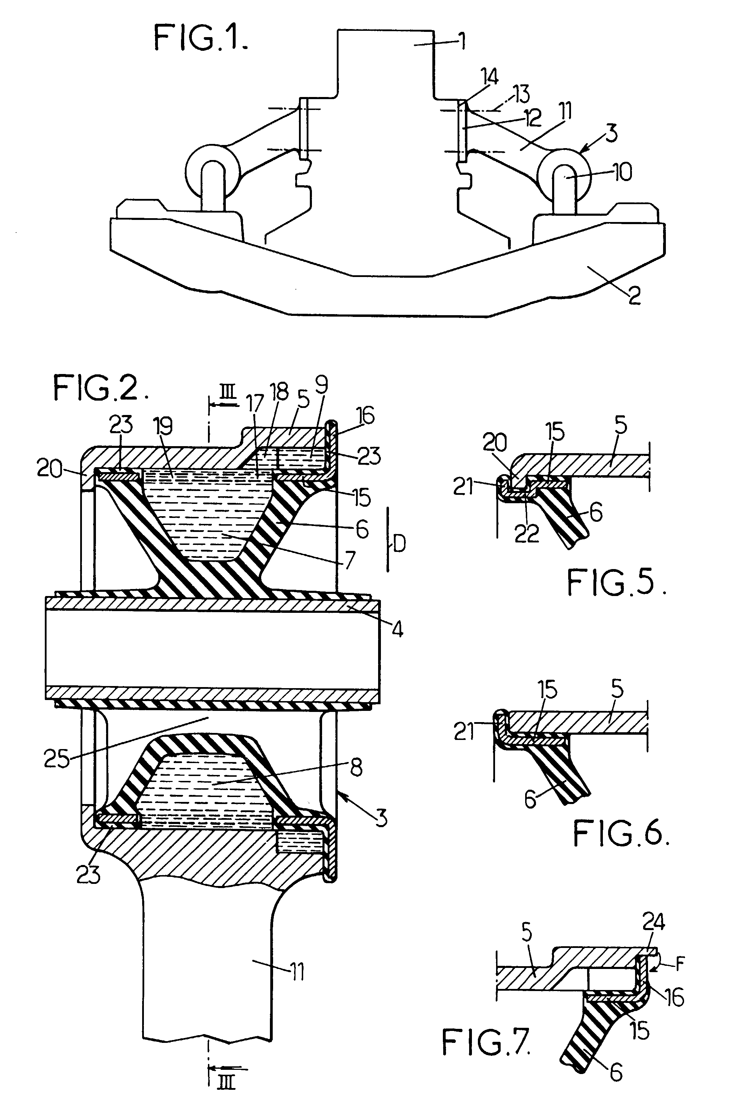

On se propose de monter un moteur 1 de véhicule sur le châssis 2 de ce véhicule, représenté par une traverse sur la figure 1, à l'aide d'au moins deux manchons antivibratoires hydrauliques qui sont désignés chacun dans leur ensemble par la référence 3.

D'une façon connue en soi, chaque manchon 3 comprend :
- une armature métallique interne tubulaire de révolution 4,
- une armature métallique externe tubulaire de révolution 5 coaxiale à l'armature 4 au moins pour l'état monté et chargé du manchon et entourant cette armature 4,
- et un corps en élastomère 6 reliant l'une à l'autre les deux armatures en ménageant entre celles-ci deux poches étanches 7, 8 diamétralement opposées selon une direction D.

Les deux poches 7 et 8 communiquent entre elles par un canal étroit 9.

Ces deux poches et le canal étroit sont remplis d'un liquide L.

L'armature interne 4 est destinée à être solidarisée avec une broche (non représentée) qui la traverse jointivement et qui est solidarisée avec le châssis 2 par l'intermédiaire de pattes parallèles 10 (figure 1) pouvant constituer une chape.

L'armature externe 5 est destinée à être solidarisée avec le moteur 1 par l'intermédiaire d'un bras de liaison rigide 11 (figures 1, 2 et 3).

Contrairement à ce que l'on observe dans les modes de réalisation connus, pour lesquels l'armature externe est constituée par un tronçon de tube indépendant qu'il faut fixer sur une extrémité du bras 11, notamment par emmanchement à force dans un palier complémentaire réservé dans cette extrémité, ladite armature externe fait ici partie intégrante dudit bras 11.

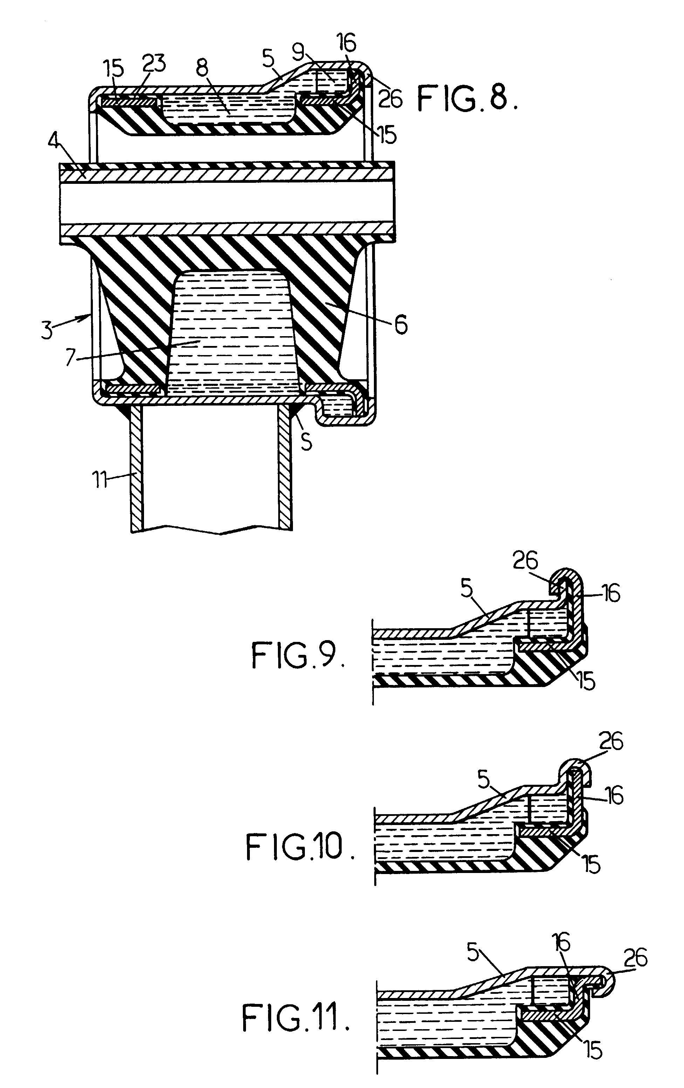

Par cette expression "partie intégrante", il faut entendre que l'armature et le bras sont conçus de façon à ne former qu'une seule pièce avant même la fabrication du manchon, pièce qui peut être constituée par un élément unique en alliage coulé (voir figure 2) -élément avantageusement renforcé par des nervures appropriées (non représentées)- ou par plusieurs éléments en tôle emboutie assemblés entre eux par des soudures S (voir figure 8).

En d'autres termes, une extrémité de la pièce unique considérée armature-bras est encore conformée de façon à constituer un palier ou logement cylindrique, mais ce palier reçoit ici directement le corps en élastomère 6 et non pas un tronçon de tube indépendant.

C'est donc la portion, de ladite pièce, délimitant extérieurement ledit palier, qui constitue elle-même ici l'armature externe 5.

Il n'est donc plus question d'assembler cette armature externe 5 sur le bras 11 après fabrication du manchon.

Cette caractéristique permet des économies appréciables, tant au niveau du nombre total des pièces constitutives (puisque le tronçon de tube indépendant peut être ici totalement supprimé) qu'en main-d'oeuvre (puisque toutes les opérations de montage relatives audit tronçon de tube indépendant sont ici supprimées).

D'une façon connue en soi, la pièce 5, 11, quant à elle, peut comporter elle-même une platine de fixation 12 facile à fixer, à l'aide de systèmes boulons-écrous appropriés 13, sur une portée complémentaire 14 du moteur 1.

Pour réaliser le canal étroit 9, on a recours ici à une cage cylindrique 15 présentant un diamètre extérieur légèrement inférieur au diamètre intérieur de l'armature externe 5 de façon à pouvoir être emmanchée dans cette dernière, ladite cage étant épaulée à l'une de ses extrémités axiales par une collerette radiale extérieure 16 propre à venir en contact avec l'extrémité axiale adjacente de l'armature externe 5.

Cette collerette 16 délimite, avec ladite extrémité de l'armature 5, deux faces latérales du canal étroit 9, lequel présente alors une section rectangulaire, les deux autres faces dudit canal étant délimitées respectivement par la portion de la paroi cylindrique de la cage 15 qui est adjacente à la collerette 16 et par la face interne d'un ressaut radial de l'armature 5.

La liaison entre chacune des poches 7 et 8 et le canal étroit 9 est effectuée à travers des ouvertures 17 pratiquées dans la paroi latérale cylindrique de la cage 15 et par des passages coudés 18 évidés dans la face cylindrique interne de l'armature 5.

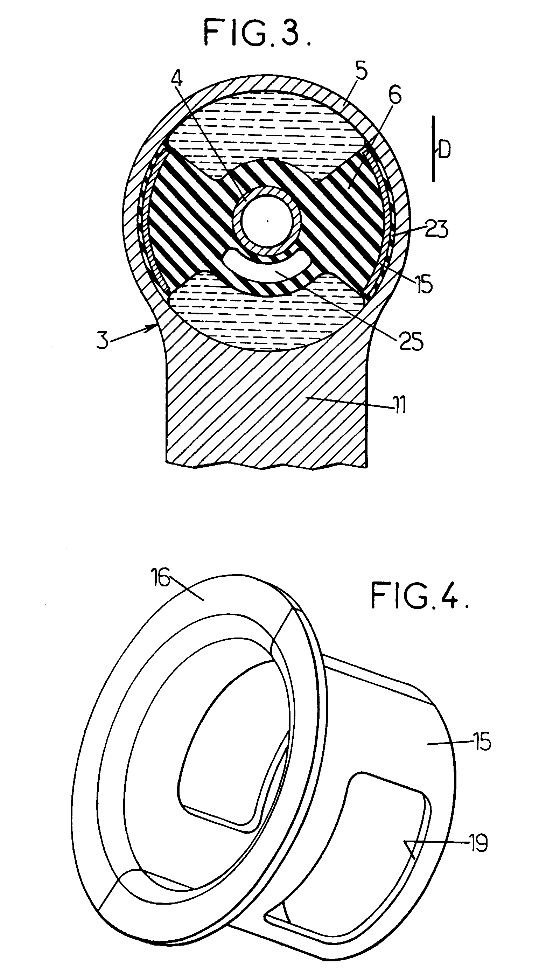

Les ouvertures 17 constituent avantageusement des petites portions de fenêtres 19 plus larges qui sont évidées dans la paroi latérale cylindrique de la cage 15 radialement en regard des poches 7 et 8 (voir figures 2 et 4) : la présence de ces fenêtres 19 facilite le moulage du corps en élastomère 6.

A l'extrémité axiale, du manchon 3, opposée à celle où se trouve la collerette 16, l'un des deux éléments constitués par l'armature 5 et par la cage 15 présente un bord rabattu radialement qui est juxtaposé contre l'extrémité axiale de l'autre élément.

Dans le mode de réalisation de la figure 2, le bord rabattu en question, visible en 20, fait partie de l'armature 5 et s'étend vers l'axe du manchon.

L'extrémité axiale en regard de la cage 15 est alors simplement juxtaposée contre ce rebord 20.

Dans la variante de la figure 5, chacune des deux extrémités axiales adjacentes de l'armature 5 et de la cage 15 est rabattue radialement en direction de l'autre, le rabat 21 orienté radialement vers l'extérieur, qui termine la cage 15, étant lui-même raccordé à la paroi cylindrique de cette cage par une plage coudée 22 constituant une rigole ouverte radialement vers l'extérieur : dans ce cas, le rabat 20 de l'armature 5 est introduit radialement dans cette rigole 22 et il est possible de constituer l'un des deux rabats 20 et 21 par une succession discontinue de languettes, les exigences relatives à l'étanchéité étant moins rigoureuses que dans le cas de la figure 2 en raison du trajet sinueux qui en résulte pour les fuites éventuelles du liquide L.

Dans le cas de la figure 6, c'est uniquement l'extrémité axiale de la cage 15 qui comprend un rebord 21 orienté radialement vers l'extérieur, rebord recouvrant l'extrémité axiale adjacente, non rabattue, de l'armature 5.

Dans la variante illustrée sur la figure 7, la collerette 16 n'est pas appliquée axialement contre la totalité de la tranche terminale de l'armature 5 : elle n'est appliquée que sur une portion intérieure de cette tranche, correspondant par exemple aux 2/3 de son épaisseur radiale, et la portion extérieure de ladite tranche, s'étendant sur le reste de ladite épaisseur, est prolongée axialement par un collier mince et étroit 24 susceptible d'être serti par rabattement selon la flèche F sur la collerette 16 : cet assemblage assure un verrouillage axial du montage de la cage 15 dans l'armature 5.

Dans tous les cas, il est avantageux d'enrober intégralement la cage 15, à l'exception éventuellement de la face plane extérieure de sa collerette 16, par le matériau élastomère constitutif du corps 6, cet enrobage étant effectué au moment même de la formation dudit corps : la mince couche de revêtement 23 en élastomère visible sur les dessins résulte de cet enrobage et assure par sa simple présence une bonne étanchéité du manchon vis-à-vis du liquide L, étanchéité réalisée automatiquement lors de l'emmanchement à force du corps 6, armé par la cage 15, dans l'armature tubulaire externe 5.

L'examen des figures 2 et 3 montre que les deux poches 7 et 8 ne sont pas rigoureusement symétriques l'une de l'autre par rapport au plan axial perpendiculaire à la direction D : alors que, au niveau de la poche 7, le corps en élastomère 6 présente une section axiale U ou en V dont le sommet est lié à l'armature 4, ce corps 6 présente, au niveau de la poche 8, une forme en U dont le sommet demeure séparé de ladite armature 4 par un espace libre 25 traversant le manchon axialement de part en part.

Comme indiqué plus haut, le manchon schématisé sur la figure 8 diffère essentiellement de celui schématisé sur la figure 2 en ce que la pièce "monobloc" formée par l'armature externe 5 et le bras 11 est constituée par des éléments en tôle emboutie qui sont soudés l'un sur l'autre en S.

Dans cette variante, l'élément tubulaire constitutif de l'armature externe 5 est plus mince que précédemment et son bord 26 se prête donc mieux à des rabattements de sertissage susceptibles d'assurer son assemblage avec la collerette 16.

Plusieurs exemples de tels rabattements de sertissage concernant ce bord et/ou cette collerette ont été donnés sur les figures 8, 9, 10 et 11 :
- sur la figure 8, le bord 26 est seul rabattu vers l'axe en recouvrant la collerette 16,
- sur la figure 9, le bord 26 est rabattu radialement vers l'extérieur et recouvert par le bord de la collerette 16,
- sur la figure 10, le bord 26 est d'abord rabattu radialement vers l'extérieur, le long de la collerette 16, avant de venir recouvrir celle-ci,
- et sur la figure 9, le bord de la collerette 16 est rabattu axialement vers l'extérieur et recouvert par le bord 16.

Il est à noter que, dans tous les cas, la constitution particulière du canal étroit 9, délimité partiellement par la collerette radiale externe 16 de la cage 15, forme un bourrelet en saillie sur l'armature tubulaire externe 5.

De ce fait, et contrairement aux armatures externes des manchons connus, ladite armature externe 5 ne se prête pas ici à un emmanchement axial complet dans un palier de réception, emmanchement qui n'est pas ici requis.

En d'autres termes, il existe un effet de combinaison entre les deux caractéristiques de la constitution monobloc de l'ensemble bras 11-armature externe 5 et de la délimitation partielle du canal étroit 9 par la collerette radiale 16 épaulant la cage 15.

En suite de quoi, et quel que soit le mode de réalisation adopté, on obtient un manchon antivibratoire hydraulique dont la constitution et le fonctionnement résultent suffisamment de ce qui précède.

Ce manchon présente un certain nombre d'avantages par rapport à ceux antérieurement connus, et en particulier :
- celui de permettre la suppression du tronçon tubulaire indépendant constituant habituellement l'armature externe,
- et celui de simplifier considérablement la construction du "canal étroit" de liaison entre les poches, grâce à la présence de la cage épaulée par une collerette radiale externe.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Manchon de support antivibratoire hydraulique comprenant deux armatures rigides tubulaires (4,5) s'entourant l'une l'autre et réunies entre elles par un corps en élastomère (6) conformé de façon à former avec celles-ci au moins deux poches étanches (7,8) diamétralement opposées communiquant entre elles par un canal étroit (9), l'ensemble desdites poches et dudit canal étant rempli d'un liquide amortisseur, la portion du corps en élastomère (6) qui délimite l'une au moins des poches présentant en section axiale la forme générale d'un U ou V ouvert radialement vers l'extérieur, et le canal étroit qui relie les deux poches s'étendant selon un arc de cercle centré sur l'axe du manchon et disposé à une extrémité axiale de ce manchon, près de son armature externe (5), et ledit manchon comportant une cage cylindrique (15) présentant un diamètre extérieur légèrement inférieur au diamètre intérieur de l'armature externe (5), **caractérisé en ce que** cette armature externe (5) est constituée par une portion intégrante d'un bras rigide (11) propre à relier le manchon à une structure rigide (1) écartée de ce manchon et en ce que la cage cylindrique (15) est épaulée à l'une de ses extrémités axiales par une collerette radiale externe (16), le canal étroit (9) étant délimité par cette collerette, par la portion de la paroi cylindrique de la cage que prolonge ladite collerette, par l'extrémité axiale de l'armature externe (5) qui est adjacente à cette collerette et par un ressaut interne de ladite armature externe et la liaison entre les poches (7,8) et le canal étroit (9) étant effectuée à travers des ouvertures (17) pratiquées dans la paroi latérale cylindrique de la cage (15).

2. Manchon selon la revendication 1, caractérisé en ce que les ouvertures (17) constituent des portions de fenêtres plus larges (19) évidées dans la paroi latérale cylindrique de la cage (15), radialement en regard des poches (7,8).

3. Manchon selon l'une quelconque des précédentes revendications, caractérisé en ce que, à son extrémité axiale opposée à celle où se trouve la collerette (16) l'un des deux éléments constitués par la cage (15) et par l'armature externe (5) présente un bord rabattu radialement (20,21) juxtaposé axialement contre l'extrémité axiale de l'autre élément.

4. Manchon selon l'une quelconque des précédentes revendications, caractérisé en ce que la cage (15) est enrobée intégralement (en 23), à l'exception éventuellement de la face plane extérieure de sa collerette (16), par le matériau élastomère constitutif du corps (6).

5. Manchon selon l'une quelconque des précédentes revendications, caractérisé en ce que l'armature externe (5) et le bras (11) sont constitués par deux éléments distincts en tôle emboutie soudés l'un sur l'autre.

## Patentansprüche

1. Vibrationsdämpfende, hydraulische Lager-Muffe, die zwei starre röhrenartige Armaturen (4, 5) umfaßt, die sich miteinander drehen und miteinander durch einen Elastomerkörper (6) verbunden sind, der so ausgebildet ist, daß er mit diesen wenigstens zwei dichte Taschen (7, 8) bildet, die genau gegenüber angeordnet sind und miteinander durch einen engen Kanal (9) in Verbindung stehen, wobei die Gesamtheit der Taschen und des engen Kanals mit einer Dämpfungsflüssigkeit befüllt ist, wobei der Abschnitt des Elastomerkörpers (6), der die wenigstens eine der Taschen begrenzt, im Axialschnitt im allgemeinen die Form eines U oder V aufweist, die radial nach außen offen ist, und wobei sich der enge Kanal, der die zwei Taschen verbindet, entlang eines Kreisbogens erstreckt, der bezüglich der Muffenachse zentriert und an dem axialen Ende dieser Muffe in der Nähe seiner externen Armatur (5) angeordnet ist, und wobei die Muffe einen zylindrischen Einsatz (15) umfaßt, der einen äußeren Durchmesser aufweist, der geringfügig kleiner ist als der Innendurchmesser der externen Armatur (5), **dadurch gekennzeichnet, daß** diese externe Armatur (5) aus einem einen starren Arm (11) aufweisenden Abschnitt gebildet ist, der sich eignet, die Muffe mit einer starren Struktur (1) zu verbinden, die von dieser Muffe getrennt ist, und daß der zylindrische Einsatz (15) an einem seiner axialen Enden mit einem radialen äußeren Absatz (16) unterstützt ist, wobei der enge Kanal (9) durch diesen Absatz, durch den Abschnitt der zylindrischen Einsatzwand, den der Absatz verlängert, durch das axiale, in der Nähe des Absatzes liegende Ende der externen Armatur (5), und durch einen inneren Vorsprung der äußeren Armatur begrenzt ist und die Verbindung zwischen den Taschen (7, 8) und dem engen Kanal (9) über Öffnungen (17) verwirklicht ist, die in der zylindrischen lateralen Wand des Einsatzes (15) ausgebildet sind.

2. Muffe nach Anspruch 1, **dadurch gekennzeichnet, daß** die Öffnungen (17) größere Fensterabschnitte (19) bilden, die in der lateralen zylindrischen Einsatzwand (15) radial bezüglich der Taschen (7, 8) gebohrt sind.

3. Muffe nach einem der vorangegangenen Ansprüche, **dadurch gekennzeichnet, daß** an ihrem axialen Ende, das diesem gegenüberliegt, an dem sich der Absatz (16) befindet, das eine der beiden Elemente, die durch den Einsatz (15) und die externe Armatur (5) gebildet sind, eine radial gebogene Umrandung (20, 21) aufweist, die dem axialen Ende des anderen Elementes axial gegenüberliegt.

4. Muffe nach einem der vorangegangenen Ansprüche, **dadurch gekennzeichnet, daß** der Einsatz (15), außer gegebenenfalls der flachen äußeren Fläche seines Absatzes (16), durch das Elastomermaterial, aus dem der Körper (6) gebildet ist, vollständig eingehüllt ist (bei 23).

5. Muffe nach einem der vorangegangenen Ansprüche, **dadurch gekennzeichnet, daß** die externe Armatur (5) und der Arm (11) durch zwei unterschiedliche Elemente aus Ziehblech gebildet sind, die miteinander verschweißt sind.

## Claims

1. A hydraulic antivibration support sleeve comprising two tubular rigid strength members (4, 5) one surrounding the other, the strength members being united by an elastomer body (6) shaped so as to co-operate therewith to form at least two diametrically opposite sealed cavities (7, 8) communicating with each other via a narrow channel (9), said cavities and said channel being completely filled with a damping liquid, the portion of the elastomer body (6) that delimits at least one of the cavities having an axial section that is generally U-shaped or V-shaped and that is outwardly open in a radial direction, and the narrow channel that interconnects the two cavities extending along an arc of a circle centered on the axis of the sleeve and disposed at one of the axial ends of the sleeve, close to its outer strength member (5), and said sleeve including a cylindrical cage (15) having an outside diameter that is slightly smaller than the inside diameter of the outer strength member (5),
characterized in that the outer strength member (5) is constituted by an integral portion of a rigid arm (11) suitable for connecting the sleeve to a rigid structure (1) that is offset from said sleeve, and in that the cylindrical cage (15) has a shoulder at one of its axial ends constituted by an outwardly-directed radially-extending flange (16), the narrow channel (9) being defined by said flange, by the portion of the cylindrical wall of the cage which extends from said flange, by the axial end of the outer strength member (5) which is adjacent to said flange, and by an internal step in said outer strength member, and the connections between the cavities (7, 8) and the narrow channel (9) being provided via openings (17) formed through the cylindrical side wall of the cage (15).

2. A sleeve according to claim 1, characterized in that the openings (17) constitute portions of larger windows (19) formed through the cylindrical side wall of the cage (15) and extending radially over the cavities (7, 8).

3. A sleeve according to any preceding claim, characterized in that at its axial end remote from the end having the flange (16), one of the two elements constituted by the cage (15) and by the outer strength member (5) have a radially folded margin (20, 21) that is axially juxtaposed against the axial end of the other element.

4. A sleeve according to any preceding claim, characterized in that the cage (15) is completely coated (at 23), with the possible exception of the plane outer face of its flange (16), in the elastomer material constituting the body (6).

5. A sleeve according to any preceding claim, characterized it that the outer strength member (5) and the arm (11) are made up of two separate elements of stamped sheet metal that are welded together.
